# FASCICULE DE BREVET EUROPEEN

(11) **EP 1 138 235 B1**
(45) Date de publication et mention de la délivrance du brevet: **31.01.2007**
(21) Numéro de dépôt: 01400788.4
(22) Date de dépôt: 27.03.2001
(51) Int. Cl.: A47J 31/60, C02F 1/00

(54) **Appareil électroménager comportant une cartouche amovible de traitement de l'eau**
Elektrisches Haushaltgerät mit einer ausnehmbaren Kartusche zum Behandeln von Wasser
Electric household appliance with a removable cartridge for treating water

(43) Date de publication de la demande: 04.10.2001
(73) Titulaire: SEB S.A., 69130 Ecully (FR)
(72) Inventeur: Fourny, Jacky, 72610 Berus (FR); Jouatel, Christian, 61250 Radon (FR)
(74) Mandataire: Kiehl, Hubert

(56) Documents cités:
- US-A- 4 969 393
- US-A- 5 190 643
- US-A- 5 785 844
- US-A- 5 860 354
- US-A- 5 873 995
- US-A- 5 882 507

## Description

La présente invention se rapporte aux appareils électroménagers qui comportent un réservoir d'eau froide qui alimente un chauffe-eau via une cartouche de traitement d'eau agencée de manière amovible dans le réservoir et qui comporte un boîtier fermé susceptible d'être ouvert et monté amovible dans le fond du réservoir en s'étendant verticalement, ledit boîtier comprenant une partie basse formant un godet dans lequel est montée amovible la cartouche, et une partie haute formant un chapeau s'étendant dans le prolongement du godet, ledit chapeau et ledit godet comprenant chacun au moins un orifice pour le passage de l'eau depuis le réservoir jusqu'au chauffe-eau via la cartouche.

Elle concerne, plus précisément, les appareils électroménagers dans lesquels le boîtier comprend un dispositif qui permet d'indiquer le changement de la cartouche lorsque celle-ci est usagée, implanté dans le chapeau du boîtier, et qui comprend un organe mobile, des moyens d'entraînement susceptibles de coopérer avec l'organe mobile pour imprimer à ce dernier un mouvement suivant une direction donnée, des moyens de signalisation propres à fournir une indication de changement de la cartouche lorsque ledit organe mobile atteint une position prédéterminée, et un flotteur (52) qui est monté dans le réservoir en étant déplaçable suivant une course prédéterminée sous l'action de l'eau lors du remplissage du réservoir, et qui est propre à actionner les moyens d'entraînement à chaque fois qu'il est déplacé.

Au sens de l'invention, il convient d'entendre sous le terme d'appareil électroménager, tous les types d'appareils dits de petit électroménager à usage domestique, comportant un réservoir d'eau froide alimentant un chauffe-eau qui est destiné à porter l'eau du réservoir à une température au moins égale à 60°C. De tels appareils sont constitués par exemple par des cafetières, des cuiseurs vapeur, ou encore des fours à vapeur.

Un appareil de ce type a déjà été décrit, par exemple, dans le brevet US - A 5 785 844. Bien qu'une telle réalisation permette un automatisme du dispositif d'indication du changement d'une cartouche amovible, elle nécessite, non seulement, une construction rigoureuse de manière à assurer une rotation correcte et fiable du flotteur, mais aussi une manipulation fastidieuse du flotteur en fin de cycle pour la remise à zéro de l'indicateur.

L'invention a notamment pour but de remédier à ces inconvénients et de réaliser un dispositif d'indication du changement d'une cartouche amovible de traitement d'eau, du type exposé ci-dessus, qui soit simple, commode et d'une grande fiabilité.

Selon l'invention, le flotteur est monté déplaçable en hauteur et comprend un élément flottant qui est agencé à proximité de la zone de jonction entre le godet et le chapeau du boîtier, ainsi qu'un bras d'actionnement qui présente une extrémité inférieure solidaire de l'élément flottant et une extrémité supérieure reliée aux moyens d'entraînement de l'organe mobile qui comprennent un cliquet attelé à l'extrémité supérieure du bras d'actionnement , et en ce que l'organe mobile est une roue dentée montée rotative dans la partie supérieure du chapeau du boîtier, sur un axe sensiblement perpendiculaire à l'axe vertical du boîtier, et entraînée en rotation, suivant un pas de denture donné, par le cliquet s'engageant dans les crans de cette roue, au moins un cliquet anti-retour étant engagé contre les crans de la roue pour n'autoriser la rotation de cette dernière que dans un sens.

Grâce à la simplicité du mécanisme de construction de l'ensemble flotteur-bras d'actionnement, on garantit par un simple mouvement en hauteur la cinématique continue de l'organe mobile et donc des moyens de signalisation.

Les caractéristiques et avantages de l'invention ressortiront d'ailleurs de la description qui va suivre, à titre d'exemple non limitatif, en référence aux dessins annexés dans lesquels :
- la figure 1 est une vue schématique partielle en coupe verticale d'une cafetière électrique comportant un dispositif d'indication du changement d'une cartouche amovible de traitement d'eau selon l'invention, avant remplissage du réservoir ;
- la figure 2 est une vue similaire à la figure 1, après remplissage du réservoir d'eau de la cafetière ; et
- la figure 3 est une vue schématique partielle en coupe verticale d'un cuiseur vapeur comportant un dispositif d'indication du changement d'une cartouche amovible de traitement d'eau selon l'invention, avant remplissage du réservoir.

Sur ces figures, les mêmes références se rapportent aux mêmes éléments qui remplissent les mêmes fonctions.

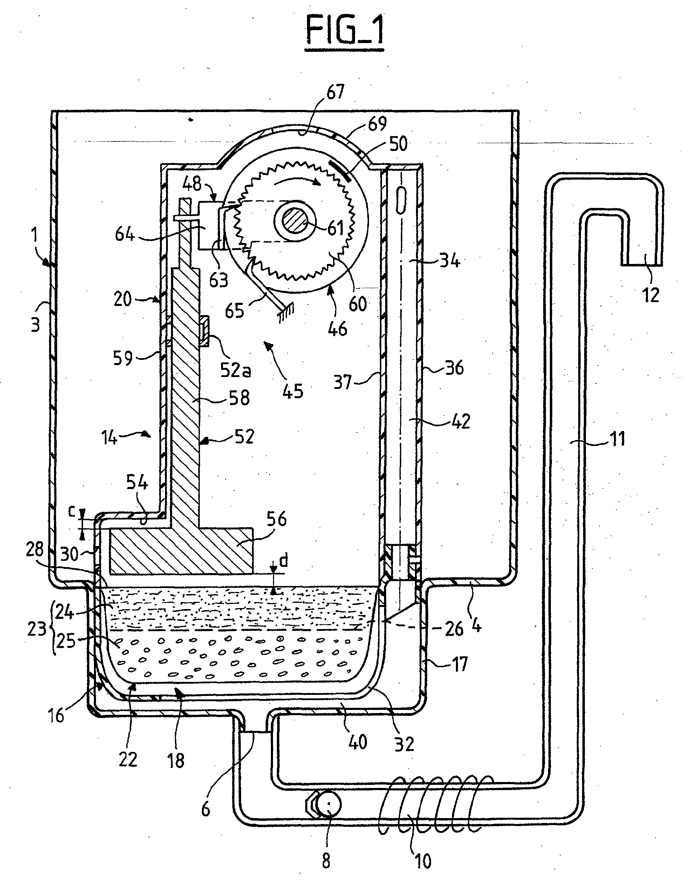

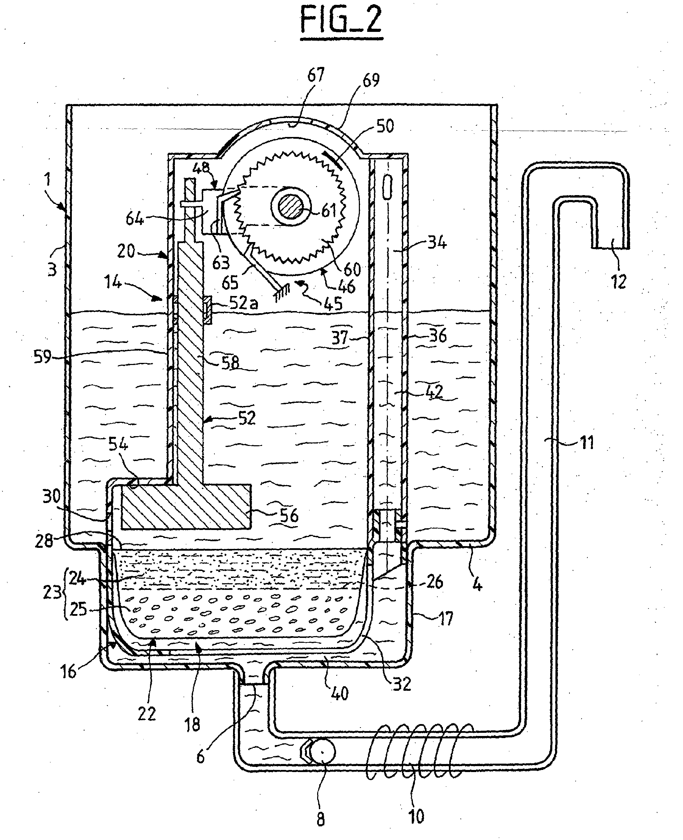

Sur les figures 1 et 2, on n'a représenté qu'une partie d'une cafetière électrique ménagère du type goutte-à-goutte, comportant un réservoir d'eau froide 1 comprenant une paroi latérale 3 et une paroi de fond 4, fermé par un couvercle non figuré, et présentant une sortie 6 formant embouchure qui est reliée, via un clapet anti-retour 8, à l'entrée d'un corps chauffant électrique formé par un chauffe-eau 10 à circulation continue.

La sortie du chauffe-eau 10 alimente par un tube ascendant 11 une goulotte 12 d'arrosage d'un filtre (non figuré) destiné à recevoir de la mouture de café et disposé au-dessus d'une verseuse collectrice d'infusion (non représentée).

Dans l'exemple de réalisation illustré aux figures 1 et 2, le réservoir 1 incorpore un boîtier amovible 14, réalisé en une matière plastique telle que, par exemple, le polypropylène, et se composant d'une partie basse formant un godet 16 qui est monté étanche dans un bassin 17, de profil adapté, formé dans le fond 4 du réservoir, et qui loge de manière amovible une cartouche de traitement d'eau 18, et d'une partie haute formant un chapeau 20 qui s'étend verticalement dans le prolongement du godet 16, sensiblement jusqu'au bord supérieur du réservoir 1.

Dans cet exemple, la cartouche amovible de traitement d'eau 18 est constituée par un sachet-filtre 22 contenant un produit de traitement d'eau 23 qui se compose présentement d'une résine échangeuse d'ions 24 et de granules de charbon actif 25 traité par des sels d'argent. La résine 24 et les granules de charbon actif 25 sont logés dans deux compartiments formés dans le sachet-filtre 22 et séparés l'un de l'autre par une toile filtrante 26. Le sachet-filtre 22 est monté étanche dans le godet 16 du boîtier 14 et est réalisé en une matière perméable à l'eau, telle que par exemple un feutre. La résine échangeuse d'ions 24 a pour effet d'enlever de l'eau les éléments tels que le calcaire qui sont responsables de l'entartrage du chauffe-eau, tandis que les granules de charbon actif 25 ont pour effet de supprimer le goût et l'odeur du chlore, de retenir une partie des impuretés organiques et d'empêcher la prolifération des bactéries.

Dans l'exemple de réalisation représenté aux figures 1 et 2, le chapeau 20 du boîtier 14 comporte dans sa partie inférieure, et à proximité de la zone de jonction 28 existant entre le godet 16 et le chapeau 20, et constituée ici par la face supérieure du sachet-filtre 22, une pluralité d'orifices 30, dont un seul est visible sur les figures 1 et 2, destinés au passage de l'eau venant du réservoir 1 afin d'alimenter le sachet-filtre 22. Le godet 16 du boîtier 14 s'étend sur une partie seulement de la profondeur du bassin 17 et présente une fente 32 destinée à alimenter le chauffe-eau 10 après passage de l'eau à travers le sachet-filtre 22. Cette fente 32 communique aussi directement avec un conduit vertical 34 délimité par une paroi latérale 36 du chapeau 20 et une paroi interne 37 de celui-ci, de sorte que l'espace 40 ménagé entre le fond du godet 16 du boîtier 14 et le fond du bassin 17, ainsi que le conduit 34, délimitent un réservoir tampon, désigné en 42, qui est intégré en partie dans le boîtier 14.

Le godet 16 et le chapeau 20 du boîtier amovible 14 sont assemblés l'un à l'autre par des moyens d'encliquetage réversible, permettant ainsi, après retrait du boîtier, d'ouvrir et de fermer celui-ci, et de procéder au changement du sachet-filtre 22 à l'état saturé lorsque le boîtier est ouvert. Pour une description détaillée de ces moyens d'encliquetage, ainsi que du fonctionnement de la cafetière décrite précédemment, et du remplacement du sachet-filtre arrivé à saturation, on se reportera au document FR- A-2 708 452.

En référence aux figures 1 et 2, la cafetière comprend de plus un dispositif, designé globalement en 45, permettant d'indiquer le changement du sachet-filtre 22 arrivé à saturation après un nombre donné d'utilisations de la cafetière, par exemple en fin de 80 utilisations ou cycles de la cafetière.

Dans l'exemple de réalisation illustré aux figures 1 et 2, ce dispositif d'indication 45 est avantageusement implanté dans le chapeau 20 du boîtier amovible 14, de sorte que le sachet-filtre 22 et le dispositif d'indication 45 forment un ensemble unitaire compact au sein du même boîtier 14.

Le dispositif d'indication 45 comprend un organe mobile 46, des moyens d'entraînement 48 susceptibles de coopérer avec l'organe mobile 46 pour imprimer à ce dernier un mouvement suivant une direction donnée, et des moyens de signalisation 50 propres à fournir une indication de changement du sachet-filtre 22 lorsque l'organe mobile 46 atteint une position prédéterminée.

Suivant l'invention, le dispositif d'indication 45 comprend en outre un flotteur 52 qui est monté dans le réservoir 1 en étant déplaçable en hauteur, suivant une course prédéterminée c (figure 1), par exemple de l'ordre de 5 millimètres, d'une position basse (figure 1) à une position haute (figure 2) sous l'action de l'eau lors du remplissage du réservoir 1, et qui est propre à actionner les moyens d'entraînement 48 à chaque fois qu'il est déplacé de sa position basse à sa position haute ; des moyens formant butée 54 sont prévus pour arrêter en position haute le flotteur 52 en fin de course, voir figure 2.

Dans un mode d'exécution préféré illustré aux figures 1 et 2, le flotteur 52 comprend un élément flottant 56, par exemple de forme parallélépipédique, qui, en position basse (figure 1), est agencé à proximité de la zone de jonction 28 entre le godet 16 et le chapeau 20 du boîtier 14, ainsi qu'un bras d'actionnement 58 solidaire de l'élément flottant 56 et s'étendant verticalement le long d'une paroi latérale 59 du chapeau 20. De préférence, l'élément flottant 56 et le bras d'actionnement 58 sont moulés d'une seule pièce. Dans cet exemple, l'ensemble formé par l'élément flottant 56 et le bras d'actionnement 58 est déplaçable en translation verticale, et est guidé au cours de son déplacement par un organe de guidage 52a monté sur la face interne de la paroi latérale 59 du chapeau 20.

Comme le montrent les figures 1 et 2, dans ce mode d'exécution, l'organe mobile 46 est constitué par une roue dentée 60, par exemple au nombre de 80 dents, montée rotative dans la partie supérieure du chapeau 20, sur un axe 61 sensiblement perpendiculaire à l'axe vertical du boîtier 14, tandis que les moyens d'entraînement 48 comprennent un cliquet 63 monté en engagement dans un cran de la roue 60 et solidaire d'un support 64 qui est monté rotatif autour de l'axe 61 et qui est attelé à l'extrémité supérieure du bras d'actionnement 58 du flotteur 52.

Sous l'action du flotteur 52 passant de sa position basse à sa position haute, suivant la course c, le cliquet 63 en engagement dans un cran de la roue 60 est apte à entraîner en rotation la roue 60, en l'occurrence en sens horaire, suivant un pas de denture donné. Dans le chapeau 20 du boîtier est monté au moins un cliquet anti-retour 65, ici un seul, qui est engagé contre un cran de la roue 60 pour interdire la rotation de cette dernière dans l'autre sens, en l'occurrence dans le sens anti-horaire.

Dans cet exemple de réalisation, la course prédéterminée c du flotteur 52 correspond à un pas de denture de la roue 60 qui est égal à une seule dent.

En regard de la figure 1, le flotteur 52 étant en position basse, l'élément flottant 56 est espacé de la zone de jonction 28 d'une distance déterminée d de telle sorte que le flotteur 52 reste en position basse lorsqu'un faible volume d'eau prédéfini, par exemple 350 cm³ correspondant sensiblement à 3 tasses de café, est versé dans le réservoir, de manière à ne mettre en service le dispositif d'indication 45 qu'à partir d'une quantité d'eau conséquente versée dans le réservoir.

Suivant le mode d'exécution représenté aux figures 1 et 2, les moyens de signalisation 50 sont constitués par une marque visible inscrite sur la périphérie de la roue dentée 60 et destinée à apparaître dans une fenêtre transparente de visualisation 67 ménagée dans la face supérieure 69 du chapeau 20 lorsque la roue 60 atteint une position prédéterminée.

Dans cet exemple, les moyens formant butée 54 destinés à maintenir le flotteur 52 en position haute (figure 2), sont constitués par un épaulement formé dans la partie inférieure du chapeau 20 du boîtier 14 et destiné à recevoir l'élément flottant 56 en fin de course.

Le dispositif d'indication 45 décrit précédemment fonctionne de la manière suivante.

Le réservoir 1 étant vide d'eau, le flotteur 52 occupe sa position basse telle qu'illustrée à la figure 1. Lors du remplissage du réservoir 1, pour un volume d'eau supérieur au faible volume d'eau prédéfini, l'eau versée pénètre dans le chapeau 20 du boîtier 14 par les orifices 30 et soulève alors le flotteur 52. Au cours de sa montée, le flotteur 52 actionne par son bras 58 le support 64 du cliquet 63, lequel cliquet fait alors tourner en sens horaire la roue 60 d'une seule dent. Lors de l'engagement du cliquet 63 dans le cran correspondant de la roue 60, le flotteur 52 occupe sa position haute dans laquelle l'élément flottant 56 est en butée contre l'épaulement 54 du chapeau 20 du boîtier, comme illustré à la figure 2.

Lors du vidage complet du réservoir 1, le flotteur 52 redescend pour venir occuper sa position basse telle que montrée à la figure 1.

Après un nombre donné d'utilisations de la cafetière, à savoir 80 utilisations dans l'exemple choisi, la roue dentée 60 a alors tourné de 80 dents pour atteindre une position angulaire dans laquelle la marque 50 portée par la roue apparaît dans la fenêtre de visualisation 67, signalant ainsi la saturation du sachet-filtre 22 et avertissant l'utilisateur qu'il doit procéder au remplacement du sachet-filtre saturé 22.

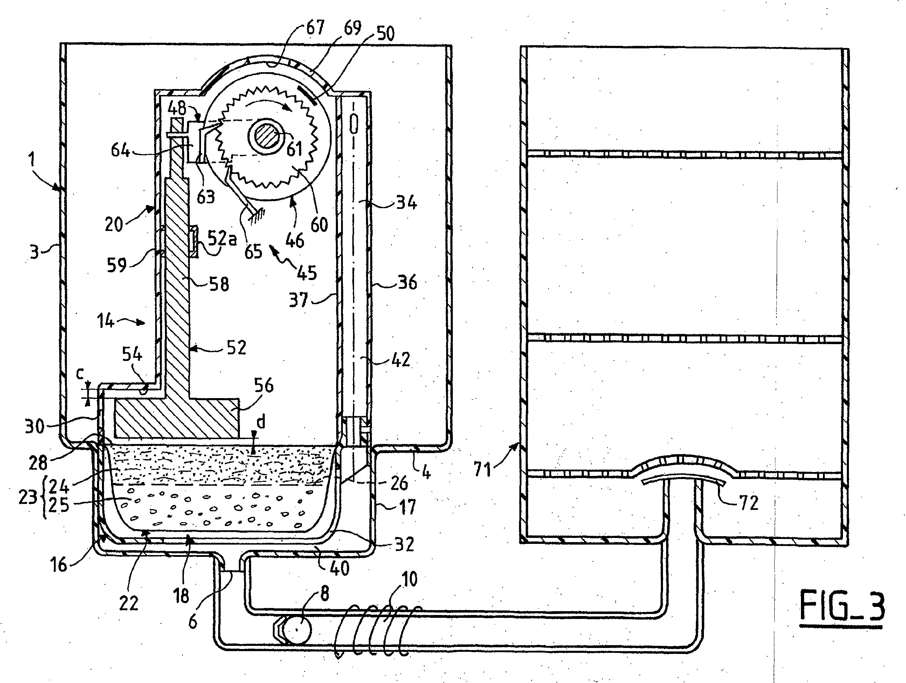

En regard de la figure 3, le réservoir d'eau 1 équipé du dispositif d'indication 45 décrit précédemment fait partie d'un cuiseur d'aliments à la vapeur. La sortie 6 du réservoir d'eau 1 est reliée au chauffe-eau 10 dans lequel l'eau s'échauffe à une température de l'ordre de 100°C afin d'être transformée en vapeur pour atteindre l'enceinte 71 du cuiseur à l'intérieur de laquelle la vapeur est distribuée au moyen d'un diffuseur 72.

## Revendications

1. Appareil électroménager comportant un réservoir d'eau froide (1) qui alimente un chauffe-eau (10) via une cartouche de traitement d'eau (18) agencée de manière amovible dans le réservoir et qui comporte un boîtier fermé (14) susceptible d'être ouvert, qui est monté amovible dans le fond du réservoir (1) en s'étendant verticalement, et qui comprend une partie basse formant un godet (16) dans lequel est montée amovible la cartouche (18), et qui comprend au moins un orifice (32) de passage d'eau, ainsi qu'une partie haute formant un chapeau (20) s'étendant dans le prolongement du godet (16), et comprenant au moins un orifice (30) de passage d'eau ; ledit boîtier comprenant en outre un dispositif (45) qui permet d'indiquer le changement de la cartouche (18), implanté dans le chapeau (20) du boîtier (14), et qui comprend un organe mobile (46), des moyens d'entraînement (48) susceptibles de coopérer avec l'organe mobile (46) pour imprimer à ce dernier un mouvement suivant une direction donnée, des moyens de signalisation (50) propres à fournir une indication de changement de la cartouche (18) lorsque ledit organe mobile (46) atteint une position prédéterminée, et un flotteur (52) qui est monté dans le réservoir (1) en étant déplaçable suivant une course prédéterminée (c) sous l'action de l'eau lors du remplissage du réservoir, et qui est propre à actionner les moyens d'entraînement (48) à chaque fois qu'il est déplacé, **caractérisé en ce que** le flotteur (52) est monté déplaçable en hauteur et comprend un élément flottant (56) qui est agencé à proximité de la zone de jonction (28) entre le godet (16) et le chapeau (20) du boîtier, ainsi qu'un bras d'actionnement (58) qui présente une extrémité inférieure solidaire de l'élément flottant (56) et une extrémité supérieure reliée aux moyens (48) d'entraînement de l'organe mobile (46) qui comprennent un cliquet (63) attelé à l'extrémité supérieure du bras d'actionnement (58), et **en ce que** l'organe mobile (46) est une roue dentée (60) montée rotative dans la partie supérieure du chapeau (20) du boîtier, sur un axe sensiblement perpendiculaire à l'axe vertical du boîtier, et entraînée en rotation, suivant un pas de denture donné, par le cliquet (63) s'engageant dans les crans de cette roue, au moins un cliquet anti-retour (65) étant engagé contre les crans de la roue (60) pour n'autoriser la rotation de cette dernière que dans un sens.

2. Appareil électroménager selon la revendication 1, **caractérisé en ce que** la course prédéterminée (c) de l'ensemble formé par l'élément flottant (56) et le bras d'actionnement (58) correspond à un pas de denture de la roue (60) égal à une seule dent.

3. Appareil électroménager selon la revendication 1 ou 2 **caractérisé en ce que** l'ensemble formé par l'élément flottant (56) et le bras d'actionnement (58) est déplaçable en translation verticale, et **en ce que** des moyens formant butée (54) sont prévus dans la partie inférieure du chapeau (20) pour recevoir l'élément flottant (56) en fin de course.

4. Appareil électroménager selon l'une des revendication 1 à 3, **caractérisé en ce que** les moyens de signalisation sont constitués par une marque visible (50) inscrite sur la roue dentée (60), et **en ce que** la face supérieure (69) du chapeau (20) comporte une fenêtre transparente de visualisation (67) dans laquelle apparaît ladite marque (50) lorsque la roue dentée (60) atteint une position prédéterminée.

5. Appareil électroménager selon l'une des revendications 1 à 4, **caractérisé en ce que** le flotteur (52) étant en position basse, l'élément flottant (56) est espacé de la zone de jonction (28) existant entre le godet (16) et le chapeau (20) du boîtier, d'une distance déterminée (d) de telle sorte que le flotteur (52) reste en position basse lorsqu'un faible volume d'eau prédéfini est versé dans le réservoir (1).

6. Appareil électroménager selon l'une des revendications précédentes, **caractérisé en ce qu'**il est constitué par une cafetière goutte-à-goutte.

7. Appareil électroménager selon l'une des revendications 1 à 5, **caractérisé en ce qu'**il est constitué par un cuiseur d'aliments à la vapeur.

## Claims

1. Domestic electrical appliance comprising a reservoir of cold water (1) which supplies a water heater (10) via a water treatment cartridge (18) arranged removably in the reservoir and which comprises a closed casing (14) able to be opened, which is removably mounted in the bottom of the reservoir (1) whilst extending vertically and which comprises a bottom part forming a bowl (16) in which the cartridge (18) is removably mounted, and which comprises at least one water passage orifice (32), and a top part forming a cap (20) lying so as to extend the bowl (16), and comprising at least one water passage orifice (30); said casing also comprising a device (45) which indicates the change of the cartridge (18), located in the cap (20) of the casing (14), and which comprises a movable member (46), drive means (48) able to cooperate with the movable member (4) in order to impart to the latter a movement in a given direction, indicator means (50) able to provide an indication of change of the cartridge (18) when the said movable member (46) reaches a predetermined position, and a float (52) which is mounted in the reservoir (1) whilst being able to be moved in a predetermined travel (c) under the action of the water when the reservoir is filled, and which is able to actuate the drive means (48) each time it is moved, **characterised in that** the float (52) is mounted so as to be able to be moved in height and comprises a floating element (56) which is arranged close to the junction area (28) between the bowl (16) and the cap (20) of the casing, and an actuating arm (58) which has a bottom end fixed to the floating element (56) and a top end connected to the means (48) of driving the movable member (46) which comprise a pawl (63) coupled to the top end of the actuating arm (58), and **in that** the movable member (46) is a toothed wheel (60) mounted so as to rotate in the top part of the cap (20) of the casing, on an axis substantially perpendicular to the vertical axis of the casing, and driven in rotation, according to a given tooth pitch, by the pawl (63) engaging in the notches in this wheel, at least one non-return pawl (65) being engaged against the notches in the wheel (60) in order to allow the rotation of the latter in only one direction.

2. Domestic electrical appliance according to Claim 1, **characterised in that** the predetermined travel (c) of the assembly formed by the floating element (56) and the actuating arm (58) corresponds to a tooth pitch of the wheel (60) equal to only one tooth.

3. Domestic electrical appliance according to Claim 1 or 2, **characterised in that** the assembly formed by the floating element (56) and the actuating arm (58) is able to move in vertical translation, and **in that** means forming a stop (54) are provided in the bottom part of the cap (20) in order to receive the floating element (56) at the end of travel.

4. Domestic electrical appliance according to one of Claims 1 to 3, **characterised in that** the indicating means consist of a visible mark (50) inscribed on the toothed wheel (60), and **in that** the top face (69) of the cap (20) comprises a transparent display window (67) in which the said mark (50) appears when the toothed wheel (60) reaches a predetermined position.

5. Domestic electrical appliance according to one of Claims 1 to 4, **characterised in that**, the float (52) being in the bottom position, the floating element (56) is spaced apart from the junction area (28) existing between the bowl (16) and the cap (20) of the casing, by a distance (d) determined so that the float (52) remains in the bottom position when a predefined small volume of water is poured into the reservoir (1).

6. Domestic electrical appliance according to one of the preceding claims, **characterised in that** it consists of a drip coffee maker.

7. Domestic electrical appliance according to one of Claims 1 to 5, **characterised in that** it consists of a food steamer.

## Patentansprüche

1. Elektrohaushaltsgerät mit einem Kaltwasserbehälter (1), der einen Wassererhitzer (10) über eine Wasserbehandlungskartusche (18) speist, die herausnehmbar im Behälter angeordnet ist, und der ein geschlossenes Gehäuse (14) aufweist, das geöffnet werden kann und das im Boden des Behälters (1) herausnehmbar montiert ist, wobei es sich vertikal erstreckt und das einen unteren Teil umfaßt, der einen Napf (16) bildet, in dem herausnehmbar die Kartusche (18) montiert ist und der wenigstens eine Öffnung (32) für den Durchtritt von Wasser aufweist, sowie einen oberen Teil aufweist, der eine Haube (20) bildet, die sich in der Verlängerung des Napfes (16) erstreckt und mindestens eine Öffnung (30) für den Durchtritt von Wasser aufweist, wobei das Gehäuse außerdem eine Vorrichtung (45) aufweist, welche den Wechsel der Kartusche (18) anzeigen kann und die in der Haube (20) des Gehäuses (14) eingesetzt ist, und ein bewegliches Element (46), eine Antriebsvorrichtung (48), die mit dem beweglichen Element (46) zusammenwirken kann, um letzteren eine Bewegung gemäß einer gegebenen Richtung aufzuzwingen, eine Anzeigevorrichtung (50), welche eine Anzeige für den Wechsel der Kartusche (18) liefern kann, wenn das bewegliche Element (46) eine vorbestimmte Position erreicht, und einen Schwimmer (52) aufweist, der im Behälter (1) montiert und dabei gemäß einer vorbestimmten Strecke (c) unter der Wirkung des Wassers beim Füllen des Behälters verschiebbar ist und der, jedesmal wenn er verschoben wird, die Antriebsvorrichtung (48) betätigen kann, **dadurch gekennzeichnet, daß** der Schwimmer (52) der Höhe nach verschiebbar montiert ist und ein Schwimmerelement (46) aufweist, das in der Nähe der Verbindungszone (28) zwischen dem Napf (16) und der Haube (20) des Gehäuses angeordnet ist, sowie einen Betätigungsarm (58) aufweist, der ein mit dem Schwimmerelement (56) fest verbundenes unteres Ende und ein mit der Antriebsvorrichtung (48) des beweglichen Elements (46) verbundenes oberes Ende aufweist, wobei die Antriebsvorrichtung eine Klinke (63) aufweist, die am oberen Ende des Betätigungsarms (58) angehängt ist, und das bewegliche Element (46) ein Zahnrad (60) ist, das im oberen Teil der Haube (20) des Gehäuses auf einer zur vertikalen Achse des Gehäuses im wesentlichen senkrechten Achse drehbar montiert ist und durch die in die Kerben dieses Rades eingreifende Klinke (63) gemäß einem gegebenen Zahnschritt drehend angetrieben ist, wobei mindestens eine Rücklauf-Sperrklinke (65) gegen die Kerben des Rades eingreift, um die Drehung des Rades nur in einer Richtung zu gestatten.

2. Elektrohaushaltsgerät nach Anspruch 1, **dadurch gekennzeichnet, daß** die vorbestimmte Strecke (c) der vom Schwimmerelement (56) und Betätigungsarm (58) gebildeten Einheit einem Zahnschritt des Rades (60) gleich einem einzigen Zahn entspricht.

3. Elektrohaushaltsgerät nach Anspruch 1 oder 2, **dadurch gekennzeichnet, daß** die vom Schwimmerelement (56) und dem Betätigungsarm (58) gebildete Einheit vertikal verschiebbar ist und daß im unteren Teil der Haube (20) eine Anschlagvorrichtung (54) vorgesehen ist, um das Schwimmerelement (56) am Ende seiner Verschiebungsstrecke aufzunehmen.

4. Elektrohaushaltsgerät nach einem der Ansprüche 1 bis 3, **dadurch gekennzeichnet, daß** die Anzeigevorrichtung aus einer am Zahnrad (60) angebrachten sichtbaren Markierung (50) besteht und daß die Oberseite (69) der Haube (20) ein transparentes Sichtfenster (67) aufweist, in dem die Markierung (50) erscheint, wenn das Zahnrad (60) eine vorbestimmte Position erreicht.

5. Elektrohaushaltsgerät nach einem der Ansprüche 1 bis 4, **dadurch gekennzeichnet, daß**, wenn sich der Schwimmer (52) in der unteren (tiefen) Stellung befindet, das Schwimmerelement (56) einen bestimmten Abstand (d) von der Verbindungszone (28) hat, die zwischen dem Napf (16) und der Haube (20) des Gehäuses vorhanden ist, so daß der Schwimmer (52) in der unteren (tiefen) Stellung verbleibt, wenn ein geringes vorbestimmtes Wasservolumen in den Behälter (1) gefüllt wird.

6. Elektrohaushaltsgerät nach einem der vorangehenden Ansprüche, **dadurch gekennzeichnet,daß** es aus einer Kaffeemaschine mit tröpfelnder Heißwasseraufgabe besteht.

7. Elektrohaushaltsgerät nach einem der Ansprüche 1 bis 5, **dadurch gekennzeichnet, daß** es aus einem Dampfgarer für Nahrungsmittel besteht.
